# EUROPEAN PATENT SPECIFICATION

(11) **EP 2 016 745 B1**
(45) Date of publication and mention of the grant of the patent: **06.08.2014**
(21) Application number: 07760613.5
(22) Date of filing: 13.04.2007
(51) Int. Cl.: H04L 29/08, H04W 4/02, H04W 12/06

(54) **DISTANCE-BASED SECURITY**
ABSTANDSBASIERTE SICHERHEIT
SECURITE BASEE SUR LA DISTANCE

(30) Priority: 14.04.2006 US 792034 P; 27.03.2007 US 908271 P
(43) Date of publication of application: 21.01.2009
(73) Proprietor: QUALCOMM Incorporated, San Diego, California 92121 (US)
(72) Inventor: MOALLEMI, Kamran, Del Mar, c 92014 (US); EKBAL, Amal c/o Qualcomm Inc., San Diego, CA 92121 (US); LEE, Chong U., San Diego, c 92131 (US); JULIAN, David Jonathan, San Diego, California 92128 (US); XIAO, Lu c/o QUALCOMM INC., San Diego, California 92121 (US); ROSE, Gregory Gordon, San Diego, California 92117 (US)
(74) Representative: Carstens, Dirk Wilhelm
(86) International application number: PCT/US2007/066588
(87) International publication number: WO 2007/121334

(56) References cited:
- EP-A1- 1 926 335
- WO-A-2006/030341
- WO-A1-2007/026745
- US-A1- 2004 098 583
- US-A1- 2004 203 600
- US-A1- 2006 068 822

## Description

### Claim of Priority under 35 U.S.C. §119

This application claims the benefit of and priority to U.S. Provisional Patent Application No. 60/792,034, filed April 14, 2006, which was assigned Attorney Docket No. 060999P1, and U.S. Provisional Patent Application No. 60/908,271, filed March 27, 2007, which was assigned Attorney Docket No. 061886P1, each of which is assigned to the assignee hereof.

### BACKGROUND

### Field

This application relates generally to wireless communication, and to distance-based functionality in a wireless communication device.

### Background

In a wireless communication system various provisions may be made to enable two or more wireless devices to communicate with one another and, in some applications, to enable one wireless device to access functionality provided by another wireless device. For example, when a wireless device enters a coverage area of another wireless device, the wireless devices may perform an association operation to enable the two devices to communicate with one another.

In some applications a device may require a certain level of certainty as to the authenticity of another device before its responds to a communication from that device or responds to a request to access functionality from that device. For example, in a point-of-sale application, a first device may include digital wallet functionality and a second device may include digital cash register functionality. In this case, before it authorizes the transfer of any money, the first device may verify that the second device is indeed the intended recipient. Another example involves a set-top box that may be configured to ensure that only authorized persons (e.g., using authorized devices) are allowed to control or access content provided by the set-top box.

In another example, to prevent a third party from eavesdropping on wireless communications between a cell phone and a headset, each device may ensure that it only establishes communication with an authorized device. For example, one attack that Bluetooth-enabled devices are experiencing is where a person is wearing a Bluetooth headset and a third party uses a high gain directional antenna to communicate with the headset. In this scenario, the third party may activate the microphone and listen in on the person's surrounding and conversations.

Various techniques may be employed to authenticate devices to one another or to otherwise secure communication between the devices. For example, in some implementations data sent between the devices is encrypted using one or more public or private keys. In practice, however, weak keys are often employed or the key exchange process may be compromised. For example, although Bluetooth supports a protocol for securing communication with a given device, in practice, most users either fail to enable this security protocol or use a relatively simple security key that is easily compromised. Moreover, some conventional security protocols are based on an assumption that high computational complexity is needed to break keys. However, after the keys are released, more efficient computational methods may be found. In addition, the computational power of the types of devices that could be used to breach such security protocols continues to increase as newer versions of such devices are developed.

US 2004/098583 relates to distanced-based security.

In view of the above, there is a need for a more effective method of securing communication and other interactions between devices.

### SUMMARY

The invention is defined by the independent claims.

A summary of sample aspects of the disclosure follows. It should be understood that any reference to the terms aspect or aspects herein may refer to one or more aspects of the disclosure.

This application relates in some aspects to performing an act based on at least one distance between devices. For example, various techniques may be employed to determine a distance-related function such as distance or relative motion between two devices. A determination may then be made as to whether the determined distance function meets specified criteria. If so, a corresponding action may then be taken.

In some aspects a device may perform an act in cooperation with another device based on one or more determined distances. For example, two or more devices may authenticate one another based on a distance-based criterion. Such authentication may take various forms and involve a variety of actions.

In some aspects one or more distance-based criteria are used to control whether a device is allowed to request another device to perform one or more functions. For example, a device may be enabled to request or disabled from requesting another device to perform one or more functions based on whether the devices are within one or more distance ranges of one another and/or are moved with respect to one another in a certain manner.

In some aspects one or more distance-based criteria are used to control whether a device may perform one or more functions requested by another device. For example, a device may be enabled to perform or disabled from performing one or more functions based on whether the devices are within one or more distance ranges of one another and/or are moved with respect to one another in a certain manner.

A distance-related function as taught herein may take various forms. For example, such a function may relate to a distance between devices, two or more distances between devices if the devices are moved with respect to one another, a rate of change in relative distance between devices, relative acceleration between devices, some other distance-related function, or some combination of two or more of these distance-related functions.

A distance-related function as taught herein may be implemented in various ways. For example, a distance may be measured by determining the amount of time it takes for signals to travel from one device to another device and then back (e.g., a round-trip time). Such a round-trip time may be calculated, for example, using two-way ranging or by sending interrogation and response signals between the devices. A distance also may be determined using a time-of-arrival measurement or a received power measurement. A rate of change in relative distance may be determined through the use of, for example, a time-of-arrival measurement, a received power measurement, acceleration readings, imaging techniques, detection of changes in electrical and magnetic fields, or detection of Doppler shifts. Relative acceleration between devices may be determined from the rate of change in relative distance data.

### BRIEF DESCRIPTION OF THE DRAWINGS

These and other features, aspects and advantages of the disclosure will be more fully understood when considered with respect to the following detailed description, appended claims and accompanying drawings, wherein:
FIG. 1 is a simplified block diagram of several sample aspects of a communication system adapted to perform distance-based operations;
FIG. 2 is a flowchart of several sample aspects of operations that may be performed by a device that performs one or more functions in response to a request;
FIG. 3A is a flowchart of several sample aspects of operations that may be performed by a device to request another device to perform one or more functions;
FIG. 3B is a flowchart of several sample aspects of operations that may be performed in conjunction with a request to another device to perform one or more functions;
FIG. 4 is a simplified block diagram of several sample aspects of a wireless device adapted to request another device to perform one or more functions;
FIG. 5 is a simplified block diagram of several sample aspects of a wireless device adapted to perform one or more functions in response to a request;
FIG. 6 is a flowchart of several sample aspects of operations that may be performed by devices to determine at least one distance;
FIG. 7 is a flowchart of several sample aspects of operations that may be performed in conjunction with authorizing a request to perform one or more functions;
FIG. 8 is a simplified block diagram of several sample aspects of a wireless device adapted to perform distance-based operations;
FIG. 9 is a simplified block diagram of several sample aspects of communication components; and
FIG. 10 is a simplified block diagram of several sample aspects of a device adapted to perform distance-based operations.

In accordance with common practice the various features illustrated in the drawings may not be drawn to scale. Accordingly, the dimensions of the various features may be arbitrarily expanded or reduced for clarity. In addition, some of the drawings may be simplified for clarity. Thus, the drawings may not depict all of the components of a given apparatus (e.g., device) or method. Finally, like reference numerals may be used to denote like features throughout the specification and figures.

### DETAILED DESCRIPTION

Various aspects of the disclosure are described below. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. For example, in some aspects one or more distance-based criteria are used to control whether a device may perform one or more functions requested by another device. In addition, in some aspects a determined amount of time also may be used to control whether a device may perform one or more functions requested by another device.

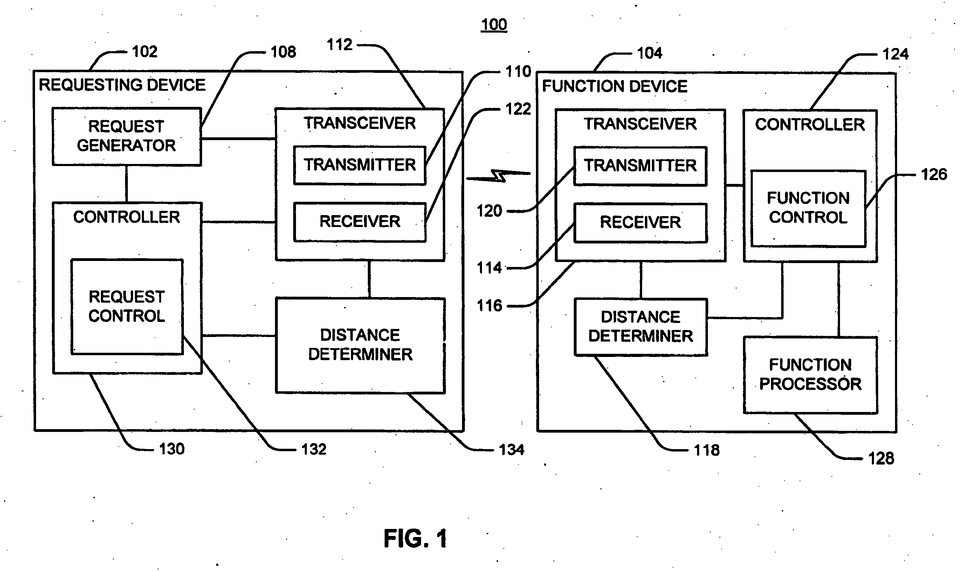

FIG. 1 illustrates sample aspects of a communication system 100 where a first device 102 may communicate with a second device 104 via a wireless communication link 106. As an example, the device 102 may enter a wireless coverage area of the device 104, or vice versa, and various provisions may then be taken as discussed below to enable the devices 102 and 104 to communicate and otherwise interact with one another. In particular, the devices 102 and 104 include functionality whereby one or more operations may be initiated, terminated, or performed in accordance with one or more distance relationships between the devices 102 and 104.

The devices 102 and 104 in the example of FIG. 1 are depicted in a simplified manner to emphasize certain components that may provide functionality relating to distance determination and associated operations. Specifically, the device 102 is depicted to emphasize components that may be employed in a device that requests another device (e.g., device 104) to perform one or more functions. Conversely, the device 104 is depicted to emphasize components that may be employed in a device that determines one or more distances between the devices 102 and 104 and performs one or more functions based on the determine distance(s) and a request from another device (e.g., device 102).

In general, a given device may incorporate the functionality depicted for device 102, the functionality depicted for device 104, or some combination thereof. For example, either of the devices may include functionality that determines distance or facilitates distance determination by another one of the devices. In addition, either of the devices may perform one or more operations based on a distance determination.

In some aspects, a first device (e.g., device 104) may implement an authentication procedure whereby a second device (e.g., device 102) is allowed access to the first device only if the distance-related functions associated with the devices meets a specified criterion. Such a criterion may involve, for example, whether the device 102 is within one or more specified distances (e.g., ranges) of or is moved in a specified manner with respect to the device 104, or vice versa.

A simplified example of an authentication procedure follows. Initially, the device 102 sends a request seeking access to the device 104. In the example of FIG. 1, a request generator 108 may cooperate with a transmitter 110 of a transceiver 112 to transmit the request to a receiver 114 of a transceiver 116 of the device 104. The device 102 may seek access to the device 104 to, for example, request a connection to the network to which the device 104 is connected, request access to certain information controlled by (e.g., stored on or passed through) the device 104, request the device 104 to perform some action, or make some other request that causes the device 104 to verify the identity of the device 102.

After receiving the request from the device 102, the device 104 measures the distance between the devices 102 and 104. As will be described in more detail below, the device 104 may employ one or more of various ranging techniques to measure this distance. Referring again to the example of FIG. 1, in a typical implementation a distance determiner component 118 of the device 104 may cooperate with a transmitter 120 and the receiver 114 to transmit and receive ranging signals, respectively. In some implementations, a receiver 122 and the transmitter 110 of the device 102 may cooperate with the transceiver 116 to receive and transmit the ranging signals, respectively.

In some aspects multiple distance measurements may be made at this step. For example, a distance-based function may relate to relative motion between the two devices. Such relative motion may include, in some aspects, a sequence of relative distances between devices, relative motion between the devices, or relative acceleration between the devices.

After measuring the distance(s), the device 104 (e.g., a controller 124) determines whether each measured distance between the devices 102 and 104 meets a specified criterion. If the criterion is met, the device 104 (e.g., a function control component 126) may allow the request from the device 102. Accordingly, a function processor 128 of the device 104 may perform one or more functions to provide the requested access.

The specified criterion may take various forms based on the requirements of a given application. For example, in some applications a criterion may be whether the measured distance is less than a threshold distance. In some applications a criterion may be whether the measured distance falls between a pair of distances (e.g., D1 and D2). In some applications a criterion may specify that a device (e.g., device 102) must move in and move out of a series of ranges with respect to another device (e.g., device 104) based on a predefined sequence (e.g., pattern).

In some aspects, multiple distance-based criteria may be employed to provide different levels of security (e.g., access control). In general, there may be multiple levels of access (e.g., A1, A2, ... , An) associated with corresponding authorization distances (e.g., D1, D2, ... , Dn). Here, the device 104 may measure the distance to device 102, and compare the measured distance with the authorization distances to determine a level of access to be provided to the device 102.

In a sample use case, if a remote control device (e.g., device 102) is within 1 meter of a set-top box (e.g., device 104) the device 102 may be authorized to make pay-per-view purchases. In addition, if the device 102 is within 5 meters of the set-top box (e.g., if the user is in the same room), the device 102 may be authorized to change the channel. In contrast, if the device 102 is more than 5 meters away from the set-top box (e.g., if the user has left the room), the device 102 is not allowed access to the set-top box.

Another sample use case relates to communication between a cell phone and a peripheral device (e.g., a headset). Here, the headset and the cell phone may be paired together only when they are 0.5 meters apart or less. In addition, once the headset and the cell phone are paired together, they may communicate with one another if they are 1.5 meters apart or less. Then, if the headset and the cell phone or more than 1.5 meters apart, the headset will not be allowed to set up calls or tear down calls.

In some aspects communication between devices may comprise an ongoing transaction. For example, the transaction may involve the transmission of a multimedia stream from the device 104 to the device 102. In such a case, the device 104 may periodically measure the distance to the device 102 to determine whether to continue the transaction. In some aspects a heuristic may be employed in conjunction with determining whether to continue a transaction. For example, the transaction may be terminated if the distance between the devices does not meet a specified criterion (e.g., a maximum distance threshold) for a given period of time. Referring to the set-top box example discussed above, access to content (e.g. playing of a movie) may be disabled if the authorized viewer leaves the room for more than a designated period of time.

Some applications may employ one or more of the above criteria. For example, a criterion may specify two distances D1 and D2, where D1 is less than or equal to D2. In addition, the criterion may specify that the distance between the devices must be less than D1 to start a transaction, and that the distance between the devices must be less than D2 to continue the transaction.

In some aspects, provisions may be made to control whether the device 102 may request access to the device 104. For example, a controller 130 may comprise a request control component 132 that controls whether the request generator 108 may send a request to the device 104. In some implementations, this control may be based on a distance-related function. Accordingly, the device 102 may include a distance determiner component 134 that measures one or more distances between the devices 102 and 104 as discussed herein.

In view of the above it should be appreciated that the teachings herein may be employed to provide a basic level security for two or more devices. This security may be implemented independently or may be implemented in conjunction with other forms of authentication. As an example of the latter scenario, a distance-based security procedure may be used as an additional layer of security (e.g., authentication) for an authentication procedure where a first device uses one or more public or private cryptographic keys to authenticate a second device. In accordance with conventional practice, the first and second devices may obtain the cryptographic key(s) via some form of key exchange protocol.

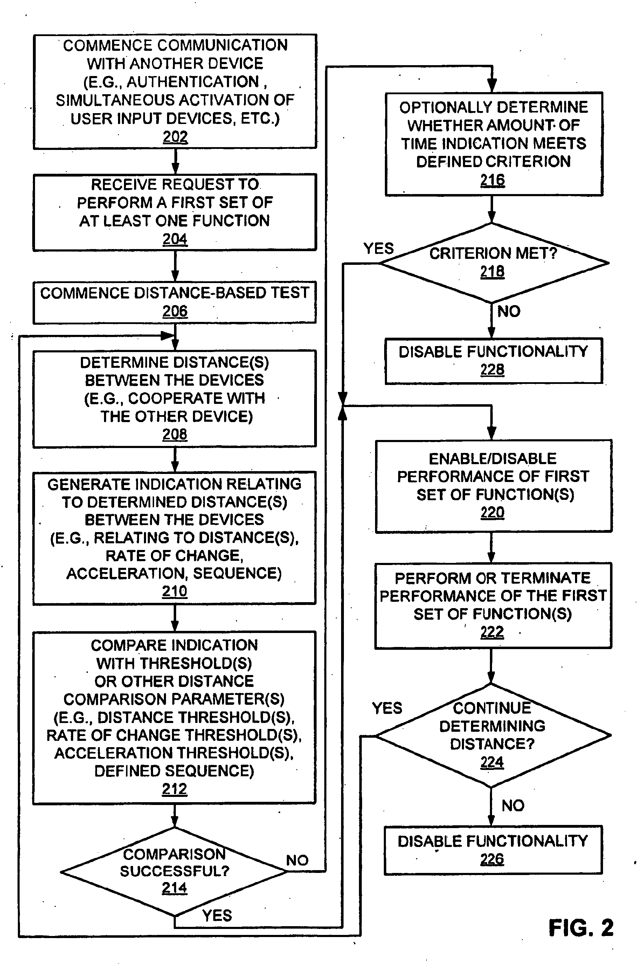

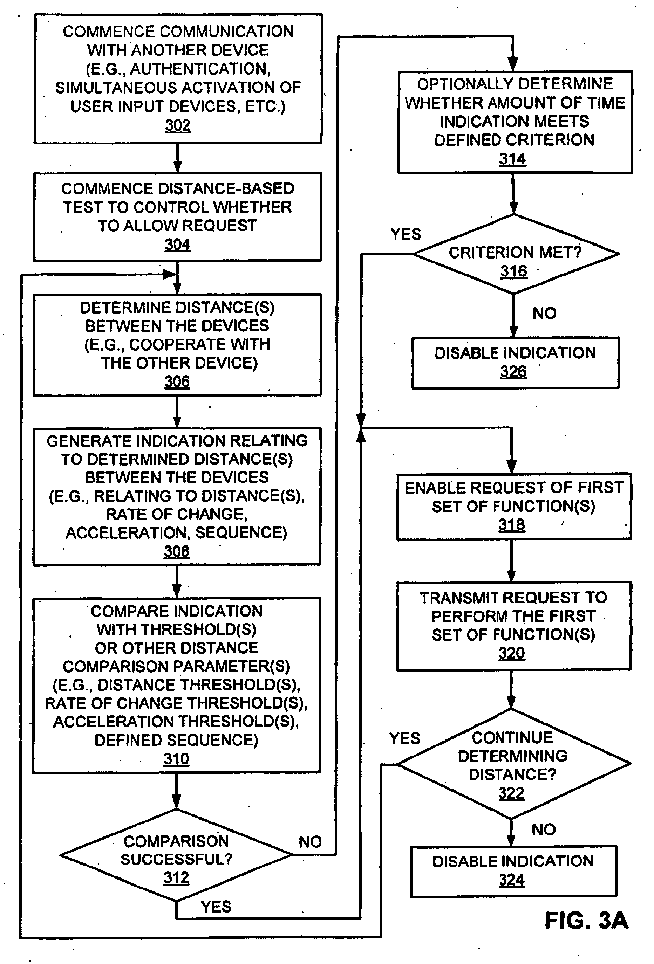

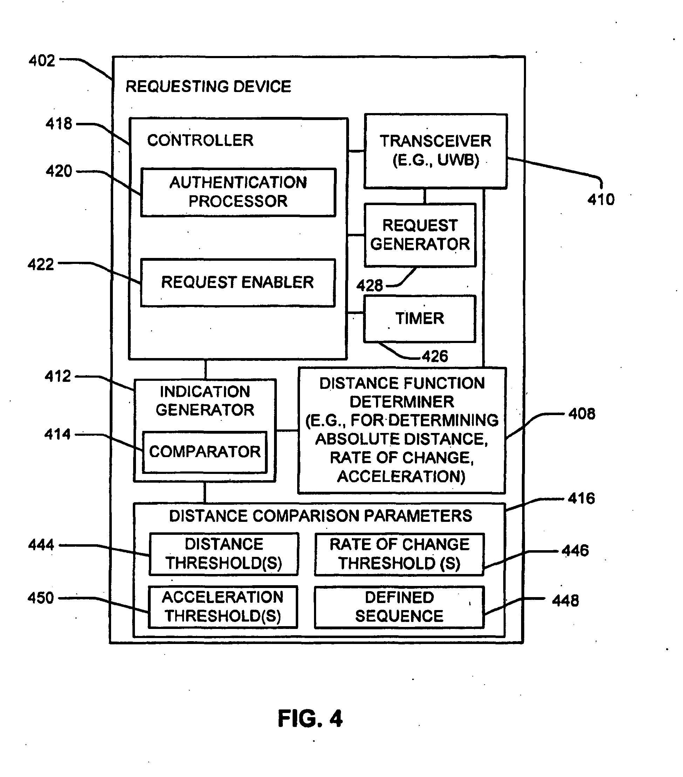

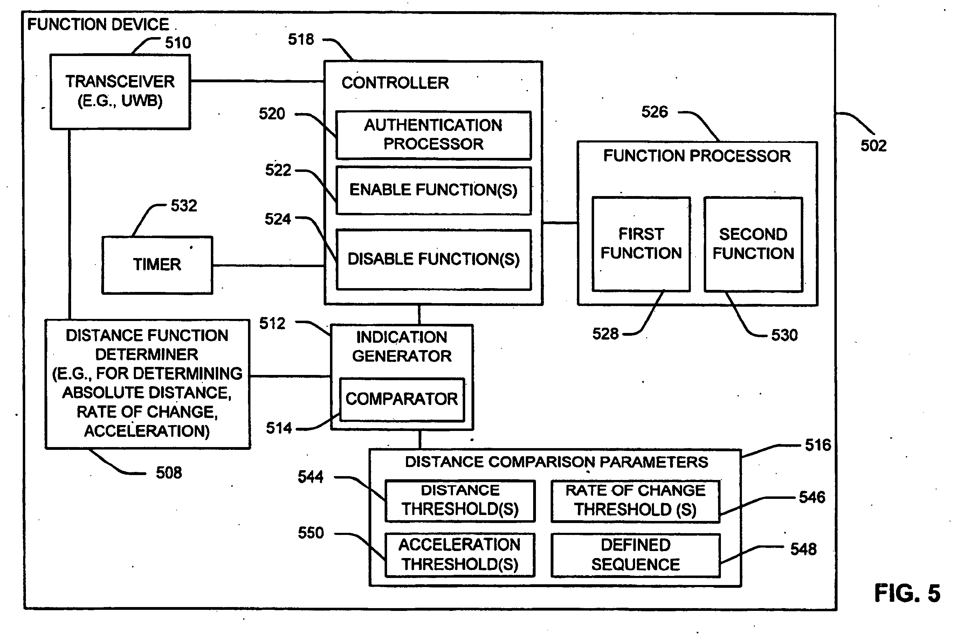

With the above overview in mind, additional details of distance-based operations will be discussed in conjunction with the flowcharts of FIGS. 2 and 3A and the block diagrams of FIGS. 4 and 5. FIG. 2 relates to operations that may be performed, for example, in response to a request to perform one or more functions. FIG. 3A relates to operations that may be performed, for example, to request another device to perform one or more functions. FIG. 4 illustrates several functional components of a sample device 402 that requests another device to perform one or more functions (e.g., similar to device 102 in FIG. 1). FIG. 5 illustrates several functional components of a sample device 502 that performs one or more functions (e.g., similar to device 104). For convenience, the operations of FIGS. 2 and 3A (or any other operations discussed herein) may be described as being performed by specific components (e.g., devices 402 and 502). It should be appreciated, however, that these operations may be performed in conjunction with and/or by other components and, in some cases, using a different number of components. It also should be appreciated that one or more of the operations described herein may not be employed in a given implementation.

Referring initially to FIG. 5, the device 502 includes a distance function determiner component (hereafter, distance determiner 504) that is adapted to perform various functions relating to determining one or more distance-related parameters. For example, the distance determiner 504 may determine an absolute distance between the devices 402 and 502, two or more distances between the devices 402 and 502 (e.g., in the event the devices 402 and 502 are moved with respect to one another), a rate of change in the relative distance between the devices 402 and 502, relative acceleration between the devices 402 and 502, or some other distance-related function. As will be discussed in more detail below, the distance determiner 504 may thus include appropriate components or may cooperate with one or more other components (e.g., a transceiver 510) to determine the distance between the devices 402 and 502.

The device 502 also includes an indication generator 512 that is adapted to generate an indication relating to the determined distance parameter(s). For example, the indication generator 512 may generate an indication of the determined absolute distance(s), rate of change in relative distance, relative acceleration, etc. In addition, the indication generator 512 may include a comparator 514 that compares a determined distance with a distance comparison parameter 516 (e.g., a threshold) that may be maintained in the device 502 (e.g., in a data memory). The indication generator 512 may then generate a comparison result indication in accordance with the comparison. In some aspects the distance comparison parameters 516 may comprise one or more distance thresholds 544, one or more rate of change of distance thresholds 546, one or more acceleration thresholds 550, and one or more defined sequences 548. Thus, one type of comparison result indication may indicate that a determined distance is less than a maximum distance threshold.

The device 502 includes a controller 518 (e.g., a processor) that is adapted to perform various operations based on at least one determined distance. For example, the controller 518 may invoke one or more operations depending on the value of the indication and, optionally, based on distance-related timing information provided by timer 532. In some aspects the device 502 may include a function processor 526 adapted to perform or facilitate the performance of one or more functions (e.g., a first function 528 and a second function 530) based on the indication. In addition or in the alternative, one or more operations performed by the controller 518 and/or the function processor 526 may utilize the indication in some manner.

In the example of FIG. 5 the controller 518 provides functionality relating to authentication and relating to enabling or disabling one or more functions. For example, an authentication procedure, a function, or both, may be invoked or may be dependent on a given distance-related relationship between the devices 402 and 502. Accordingly, the controller 518 may comprise one or more components adapted to provide functionality of an authentication processor 520, a component 522 for enabling one or more functions, and a component 524 for disabling one or more functions.

Referring now to FIG. 4, the device 402 may include several components that operate in conjunction with corresponding components of device 502. For example, the device 402 may include a transceiver 410 adapted to communicate via one or more wireless communication links (e.g., the link 106 in FIG. 1) with one or more wireless devices (e.g., the transceiver 510 of the device 502). The device 402 also may include a controller 418 that provides functionality that is complementary to the functionality of the controller 518. For example, the controller 418 may include an authentication processor 420 that may cooperate with the authentication processor 520 to authenticate the devices 402 and 502 to one another. The device 402 also may include a distance function determiner 400 that performs distance-related operations in cooperation with the distance determiner 508.

In some aspects the device 402 may include one or more components that provide functionality similar to corresponding components of device 502. For example, the distance determiner 408 may determine one or more distance-related functions that may be used to enable or disable functionality of the device 402. Thus, the device 402 also may include an indication generator 412 (including a comparator 414) that generates distance-related indications based on the distance related function(s) and distance comparison parameters 416. In a similar manner as discussed above, the distance comparison parameters 416 may comprise one or more distance thresholds 444, one or more rate of change thresholds 446, one or more acceleration thresholds 450, or one or more defined sequences 448. The device 402 also may include a timer 426 that provides timing information relating to the distance-based operations.

Additional examples of operations that may be performed by the devices 402 and 502 or other similar devices will be discussed in conjunction with the flowcharts of FIGS. 2 and 3A. Initially, the operations of FIG. 2 will be treated.

As represented by block 202, a first device such as device 502 commences communication with a second device such as device 402. Communication may be invoked, for example, when the device 502 determines that the device 402 has entered a wireless coverage area associated with the device 502, or vice versa. Communication may be initiated automatically or may be initiated based on an action by a user who wants the devices 402 and 502 to interact in some manner. In the former case, a discovery mode may be continually enabled such that a device may repeatedly scan to determine whether it has entered a coverage area of a wireless network (e.g., a body area network or personal area network) or a coverage area of some other wireless device. In the latter case, the user may utilize (e.g., actuate) an input device of a device to initiate a discovery mode that causes the device (e.g., the receiver of the device) to commence scanning for nearby wireless networks or wireless devices. In conjunction with the operations of block 202, the user may bring the devices 402 and 502 within a certain range of one another.

Referring to FIG. 3A, the device 402 also may perform operations that are similar and/or complementary to the operations of block 202. As represented by block 302, the device 402 may commence communication operations by, for example, attempting to discover nearby wireless devices. As discussed above, this may be initiated automatically or in response to some action by the user (e.g., utilizing an input device of the device 402). In addition or in the alternative, the device 402 may commence a discovery procedure in response to a signal received from the device 502. It should be appreciated that other techniques may be employed to commence discovery or some other similar procedure for initiating communication between devices such as devices 402 and 502.

In conjunction with the establishment of communication between the devices 402 and 502, the devices may perform an authentication procedure or some other similar procedure. In general, authentication relates to verifying an identity of another device. Through the use of an authentication procedure, a device may verify that it is authorized to communicate with the other device and/or verify that a given set of operations may be performed in conjunction with the other device. As an example of the former scenario, an authentication procedure may involve pairing the devices 402 and 502 to enable certain types of communication (e.g., establish a connection) between the devices 402 and 502. Thus, the authentication procedure may be used to determine whether application-level communication may be established between the devices 402 and 502. As an example of the latter scenario, a given device may allow a requesting device to access certain services provided or controlled by the device if the requesting device has appropriate authorization. Such services may include, for example, connection to a network; modifying device settings; transferring digital rights; access to a pay-per-view service; access to information including protected media such as data, audio, video; or some combination thereof.

Authentication may be performed in a variety of ways. In some implementations an authentication procedure may involve sending security credentials (e.g., passwords) and/or user biometric information from one device to another. In a typical scenario, each device will authenticate the other device. For example, the device 502 may authenticate the device 402 and the device 402 may authenticate the device 502. Thus, as represented by block 302 of FIG. 3A, the device 402 may perform authentication operations that are similar and/or complementary to the operations of block 202. In this way, each device may send security credentials or other suitable information to the other device and receive corresponding information from the other device.

A variety of operations may be performed in conjunction with an authentication procedure or in conjunction with a distance-based operation. For example, in some applications an authentication procedure (e.g., a pairing process) may employ a human synchronization test. For example, such a test may be based on a human synchronization ability whereby a given person may easily actuate two switches substantially simultaneously, yet it may be very difficult for an onlooker to anticipate the right time to actuate a switch at substantially the same time as another person. Accordingly, the operations of block 202 may involve instructing the user (e.g., via a visual command on a display, via a specific configuration of lighting elements such as LEDs, or via an audio command) to simultaneously activate input devices (e.g., actuate switches) on the devices 402 and 502. The authentication procedure may thus involve determining whether a switch on the device 502 is actuated (e.g., depressed and/or released) at substantially the same time as a switch on the device 402 is actuated. As represented by block 302 of FIG. 3A, the device 402 may perform operations that are similar and/or complementary to the operations of block 202. As will be discussed in more detail below, a variety of user input devices (e.g., other than switches) may be used for this operation.

The synchronization test may be implemented in a variety of ways. For example, in some implementations the device 502 may compare the times that the respective switches on the devices 402 and 502 are depressed, the times that the respective switches on the devices 402 and 502 are released, or both. In some implementations the synchronization test may involve multiple actuations of the switches. For example, the user may pick several random timings to simultaneously press and release the buttons on each device. In this case, each device will generate a sequence of times associated with the actuations of its switch. The device 502 may then compare the timings of the sequences in an attempt to determine whether the same person actuated the switches on the devices 402 and 502. In either of the above implementations, if the actuation timings from the devices 402 and 502 are sufficiently similar, the devices 402 and 502 may be authenticated to one another.

In some implementations comparison of actuation times may involve comparison of a first indication representative of a time (or times) of actuation of a user input device of one device (e.g., device 502) with a second indication representative of a time (or times) of actuation of a user input device of another device (e.g., device 402). For example, the authentication processor 520 may acquire the first indication via a user input device of device 502 and receive the second indication from the device 402. The authentication processor 520 may then compare the two indications to determine whether the actuation of the user input device of the device 502 occurred substantially simultaneously with the actuation of the user input device of the device 402.

Referring again to FIG. 2, as represented by block 204 the device 502 receives a request from the device 402 to perform a first set of at least one function (e.g., one or more functions). Here, a request generator 428 of the device 402 may generate the request under the control of the controller 418. As mentioned above, the request generator 428 may cooperate with the transceiver 410 to transmit the request to the device 502. Similarly, the transceiver 510 of the device 502 may receive the request and provide it to the controller 518.

As represented by block 206, in response to the request the controller 518 may then control whether the device 502 is allowed to perform the function or functions. In accordance with the teachings herein, this control may be based on an indication relating to at least one determined distance between the devices 402 and 502. Blocks 208 - 218 described several sample operations that may be performed in conjunction with controlling whether the device 502 is allowed to perform the requested function or functions based on such a distance-based test.

As represented by block 208 the device 502 (e.g., the distance determiner 508) determines at least one distance between the devices 402 and 502. To this end, the device 502 may receive and process one or more signals from the device 402. In addition, the device 502 may generate various signals and transmit the signals to the device 402. As represented by blocks 210 and 212, the device 502 (e.g., the indication generator 512) may generate one or more indications corresponding to the one or more determined distances. In some aspects the operations of blocks 206 - 212 may be invoked in conjunction with invoking the operations of block 202. Thus, these operations may be invoked automatically or in response to some action on the part of a user of the device 502.

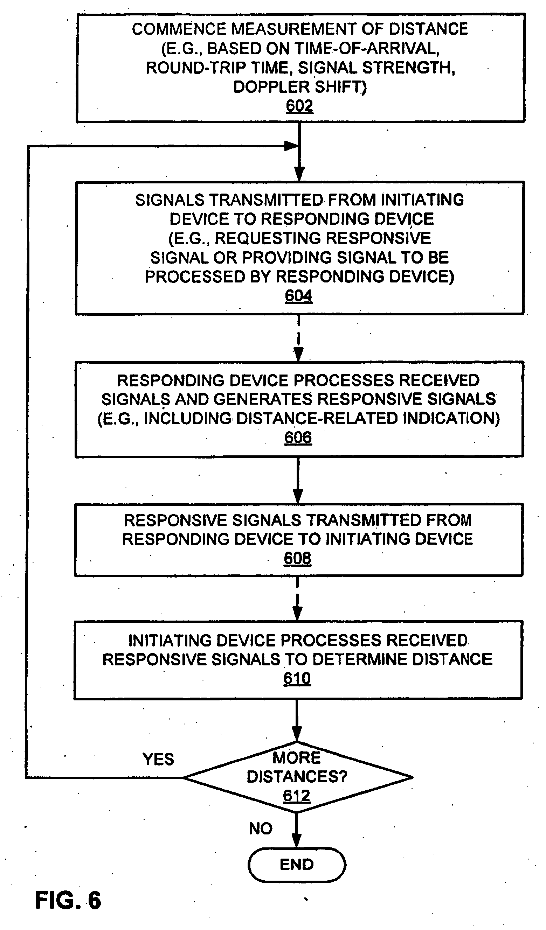

One or more of various techniques may be employed to determine a distance between the devices 402 and 502. For example, in some implementations distance may be measured using time-of-arrival measurements, round-trip time measurements, signal strength measurements, Doppler shift measurements, or some other suitable technique. Several examples of techniques for measuring distance will be discussed in conjunction with FIG. 6, commencing at block 602.

As represented by block 604, in some implementations a device such as the device 502 that initiates the distance measurement operations sends one or more signals to a responsive device such as device 402. For example, the initiating device may send a message to a responding device instructing the other device to send one or more signals back to the initiating device. Thus, in the example of FIG. 5 the distance determiner 508 may cooperate with a transmitter 510 to transmit appropriate signals to the device 402.

As represented by block 606, the responding device may process the received signals and generate responsive signals (e.g., forming a message). In FIG. 4 the distance determiner 408 may cooperate with a receiver of the transceiver 410 to receive the signals from the device 502.

As represented by block 608, the responsive signals are then transmitted from the responding device to the initiating device. In FIG. 4 the distance determiner 408 and, optionally, the indication generator 412 may thus cooperate with a transmitter of the transceiver 410 to transmit these signals to the device 502.

As represented by block 610, the initiating device processes the received responsive signals, as necessary, to determine a distance between the initiating and responding devices. In FIG. 5 the distance determiner 508 may again cooperate with a receiver of the transceiver 510 to receive the signals from the device 402.

Block 612 represents that the above operations may be repeated if there is another distance measure to be taken. Here, it should be appreciated that multiple distance determinations may be made concurrently, in a sequential manner, or in some other manner.

Sample operations of blocks 604 through 610 will now be discussed in more detail in conjunction with specific examples relating to time-of-arrival measurements, round-trip time measurements and signal strength measurements. It should be appreciated that these are but a few of the measurement techniques that may be employed and that the teachings herein may be used in conjunction with other measurement techniques.

In some implementations utilizing time-of-arrival to determine distance the initiating device may measure the times-of-arrival of signals received from the responding device. For example, at block 604 the initiating device (e.g., the distance determiner 508) may request that the responding device transmit several signals to be used for time-of-arrival measurements. At blocks 606 and 608, the responding device may then generate appropriate signals and transmit them to the initiating device. For example, the distance determiner 408 may cause the transceiver 410 to transmit appropriate signals to the transceiver 510. Then, at block 610 the initiating device (e.g., the distance determiner 508) may perform time-of-arrival measurements and, based on these measurements, determine the distance between the initiating device and the responding device.

In some implementations utilizing round-trip time measurements the initiating device (device 502) may transmit a message to the responding device at a given time (block 604). At block 606 the distance determiner 408 may determine the amount of time between receipt of the request signal by the device 402 and the transmission of a responsive signal by the device 402 (i.e., a turnaround time). Alternatively, in cooperation with the transceiver 410, the distance determiner 408 may ensure that a response signal is transmitted within a defined a turnaround time. The device 402 may thus generate a responsive message (e.g., including an indication of the turnaround time as generated, in some cases, by the indication generator 412) and transmit the message to the device 502 (block 608). At block 610 the device 502 may process the received responsive signal to calculate the round-trip time and, in turn, a distance between the devices 402 and 502. To this end, the distance determiner 508 may determine (e.g., in cooperation with the transceiver 510) the point in time at which the responsive message was received at the device 502. The distance determiner 508 may then determine the round-trip time from the time elapsed between the transmission of the signal at block 604 to the reception of the responsive signal at block 610, excluding the turnaround time of the device 402 supplied with the responsive message.

In some implementations utilizing received signal strength to determine distance the initiating device may measure the signal strength of signals received from the responding device. For example, at block 604 the initiating device (device 502) may transmit a message to the responding device requesting that the responding device transmit a signal at a known signal strength (e.g., a constant energy level). At block 606, in response to the received signal the responding device (e.g., the distance determiner 408) may cause the transceiver 410 to transmit an appropriate signal or signals to the device 502 (block 608). At block 610, the distance determiner 508 may then calculate the distance between the devices 402 and 502 based on the strength of the corresponding signal(s) received by the transceiver 510.

Referring again to block 210 of FIG. 2, the device 502 (e.g., the indication generator 512) generates an indication relating to the at least one determined distance generated at block 208. As discussed above, the distance determination and indication generation operations may involve determining one or more distance-related parameters including, for example, a distance between the devices 402 and 502, two or more distances between the devices 402 and 502, a rate of change in the relative distance between the devices 402 and 502, and relative acceleration between the devices 402 and 502. Here, a rate of change in distance (e.g., relative velocity) between the devices 402 and 502 may be determined, for example, by determining a distance between the devices at one point in time, determining a distance between the devices at one or more other points in time, and calculating the change(s) in distance over the associated time period(s). Similar information may be utilized to determine relative acceleration between the devices 402 and 502 using known techniques such as taking a derivative of the rate of change information. It should be appreciated that an indication relating to at least one distance may take a form other than those explicitly mentioned herein.

In some aspects the indication may simply specify a single determined distance between the devices 402 and 502. As will be discussed in more detail below, this form of indication may be compared with one or more threshold distances to determine whether the devices 402 and 502 are separated by a distance that is deemed acceptable for performing some function.

An indication also may specify several determined distances between the devices 402 and 502. For example, the distance between the devices 402 and 502 may be checked at various times. Such an operation may be performed in conjunction with different types of distance determination scenarios.

For example, in some aspects a distance between devices may be checked more than once to provide a more accurate distance reading. Here, clearly erroneous readings may be discarded. In addition, in some cases an average determined distance may be calculated or a mean determined distance and a standard deviation may be calculated. Accordingly, in this scenario the indication may comprise several similar determined distances, a determined distance along with a standard deviation of the determined distances, a range of the determined distances, or some other similar information.

In some aspects multiple distance readings may be employed in a scenario where performance of an operation is predicated on the devices 402 and 502 being moved in a defined sequence with respect to one another. For example, the devices 402 and 502 may initially be placed a first distance apart, then placed a second distance apart, and so forth. Accordingly, in this scenario the indication may comprise a sequence of several determined distances.

In some aspects multiple distance readings may be employed to determine a rate of change in relative distance between the devices 402 and 502. For example, a first distance between the devices may be determined at a first point in time and a second distance between the devices determined at a second point in time. A rate of change in distance may then be determined, for example, by calculating the ratio of the change in distance (e.g., first distance minus second distance) to the elapsed time (e.g. second point in time minus first point in time). Thus, in this scenario the indication may comprise the determined rate of change in relative distance (e.g., an indication of relative velocity).

In some aspects multiple readings of the rate of change in relative distance may be employed. For example, performance of an operation may be predicated on the rate of change in distance (e.g., relative velocity) between the devices 402 and 502 being changed in a defined sequence. Here, the devices 402 and 502 may be moved with respect to one another at different velocities over different time periods. In this scenario the indication may comprise a plurality of different rates of change in relative distance.

Similarly, multiple readings of the rate of change in relative distance may be utilized to determine a relative acceleration between the devices 402 and 502. For example, acceleration information may be obtained by taking the derivative of relative velocity information collected over a period of time. Thus, in this scenario the indication may comprise the determined relative acceleration at a given point in time.

In a similar manner as discussed above, multiple acceleration readings may be employed where the performance of an operation is predicated on the relative acceleration between the devices 402 and 502 being changed in a defined sequence. Thus, in this scenario the indication may comprise a plurality of different relative accelerations.

In some aspects a device may concurrently determine several types of distance-related parameters. For example, the device 502 may determine an absolute distance between the devices 402 and 502 and may determine a rate of change in relative distance between the devices 402 and 502. Here, it should be appreciated that in some aspects different distance measurement techniques may be employed to measure these different types of distance-related parameters. For example, a given measurement technique may determine a certain type of distance measurement more effectively than other measurement techniques.

As represented by block 212, the indication generated at block 210 is compared with one or more distance comparison parameters 516 (FIG. 5). Here, the nature of the comparison operation depends on the particular form of the indication.

For example, if an indication relating to a single distance was generated at block 210, this form of indication may be compared with one or more distance thresholds 544 to determine whether the devices 402 and 502 are separated by a distance that is within a range of distances deemed acceptable for performing some function. In a sample use case, initiation of a function may be predicated on the devices being less than or more than a certain distance apart (e.g., 1 meter, 3 meters, etc.). Alternatively, initiation of a function may be predicated on the devices being separated by a distance that falls within a range defined by two distance thresholds 544.

As discussed above, in some aspects more than one level of functionality (e.g., first and second functions 528 and 530) may be defined whereby different levels of functionality are employed based on different distances (e.g., at least one first distance and at least one second distance) between the devices 402 and 502. Here, one type of functionality may be employed in the event the determined distance falls within one range (e.g., the devices 402 and 502 are relatively close to one another) while another type of functionality may be employed in the event the determined distance falls within another range (e.g., the devices 402 and 502 are further apart from one another). In this case, the determined distance may be compared to one, two, or more distance thresholds 544. In addition, an indication in this case may comprise several sub-indications, each of which is associated with at least one corresponding distance-related parameter and function.

As noted above, if several indications relating to several distances were generated at block 210, these indications may be compared with one or more distance thresholds 544. In some implementations the distance thresholds 544 may relate to a sequence of distances where the distance between devices is to be changed between various distances in a defined sequence 548. In practice, a tolerance may be associated with each distance threshold of the sequence 548 to account for relatively minor deviations between the determined distances and the defined sequence 548. Accordingly, an indication may indicate that a set of determined distances is substantially equal to the defined sequence.

If an indication relating to a rate of change in relative distance was generated at block 210, this indication may be compared with one or more defined rate of change thresholds 546. A defined rate of change threshold 546 may comprise, for example, an upper threshold for the rate of change, a lower threshold for the rate of change, a range of rates of change, or a defined sequence of rates of change. As an example of the latter scenario, the ranging criteria may specify that the rate of change between devices is to be changed between various rates of change in a defined sequence 548. Again, a tolerance may be associated with each defined rate of change in the defined a sequence 548 to account for relatively minor deviations between the determined rates of change and the defined sequence 548.

If an indication relating to relative acceleration was generated at block 210, this indication may be compared with one or more defined acceleration thresholds 550. A defined acceleration threshold 550 may comprise, for example, an upper threshold for acceleration, a lower threshold for acceleration, a range of accelerations, or a sequence of accelerations. As an example of the latter scenario, the ranging criteria may specify that the relative acceleration between devices is to be changed between accelerations according to a defined acceleration sequence 548 (e.g., in a known pattern). Similar to the above scenarios, a range of tolerance may be associated with the accelerations of the defined acceleration sequence 548 to account for relatively minor deviations between the determined accelerations and the defined acceleration sequence 548.

It should be appreciated that the comparisons of block 212 may be implemented in various ways. For example, the determined distance may simply be subtracted from a distance comparison parameter. In addition, in some implementation multiple comparisons may be made. Such an approach may be used, for example, when the distance is repeatedly checked for a period of time, when several measurements are made to reduce transient conditions, to perform operations relating to a rate of change in relative distance or to relative acceleration, or when a combination of two or more types of determined distances are employed. As an example of the latter scenario, as will be discussed in more detail below an operation may be invoked or modified based on the rate of change in relative distance between devices as well as the absolute distance between the devices.

In conjunction with the operations of block 212, the indication generator 512 may generate a comparison result indication that is indicative of the results of the comparison or some other similar operation. For example, such an indication may indicate that a device did or did not meet the desired criteria for performing a distance-based operation.

As represented by block 214, the device 502 may then take appropriate action based on the results of the comparison. For example, as discussed below, if the comparison result indication indicates that distance criteria have (or a distance criterion has) been met, the device 502 may invoke or terminate a given function or alter the operation of a function in some manner (i.e., the operations proceed to block 220 discussed below).

If the comparison of block 214 is not successful, the operations of FIG. 2 may terminate, and then be invoked at some other point in time. In some implementations any previously enabled function or functions may be disabled in the event the comparison is not successful. Alternatively, in implementations where the device 502 is monitoring distance to determine whether to terminate a previously enabled function or functions, a comparison at block 214 may result in the function or functions continuing to be enabled.

As represented by block 216, in some aspects other criteria may optionally be employed in conjunction with a distance-based function and/or indication. For example, one or more other criteria may be used in conjunction with the comparison result indication of block 214 to control whether a device is allowed to perform one or more functions requested by another device (block 218). If each designated criterion is not met, the device 502 may send a message to the device 402 indicating that a function is disabled or is not allowed based on the results of the distance measurement-related operations (block 228).

In some aspects a criterion may relate to an amount of time a distance-based criterion has been met. For example, the device 502 may repeatedly check the distance between the devices 402 and 502 to ensure that a given distance-based criterion has been met for specified period of time before performing the requested function. Alternatively, the device 502 may repeatedly check the distance between the devices 402 and 502 to determine whether a given distance-based criterion has not been met for specified period of time. This procedure may be used by the device 502 to, for example, determine when to terminate a previously allowed function.

As represented by block 220, once all of the criteria are met the device 502 may enable performance of one or more functions, disable performance of one or more functions, or perform some other similar procedure. As an example of the former scenario, the device 502 may allow the device 402 to access certain services provided or controlled by the device.

As an example of the latter scenario, in some implementations access may be automatically allowed (e.g., when the devices commence communication). In this case, the device 502 may monitor the distance(s) between the devices 402 and 502 to determine when to terminate access. For example, a distance-based criterion may specify one or more distances or relative motions between the devices 402 and 502 that cause one or more functions to be terminated. As a more specific example, the device 502 may monitor the distance between the devices 402 and 502 to determine whether the distance exceeds a threshold parameter. In the event the distance exceeds this parameter, the device 502 may disable performance of the corresponding function or functions.

As represented by block 222, the device 502 (e.g., the function processor 526) may perform the requested function or functions. In addition, the device 502 may transmit a message to the device 402 that indicates that the request has been accepted. For example, the device 502 may send an indication that the function is enabled and/or that the function has completed. As discussed above, in some aspects different functions may be associated with different distance-related criteria. Thus, the first function 528 may be performed or terminated depending upon whether a first distance related criterion is met. In addition, the second function 530 may be performed or terminated depending upon whether a second distance related function is met.

As represented by block 224, in some aspects the device 502 may repeatedly determine the distance between the devices 402 and 502. For example, for a function that relates to an ongoing event (e.g., transaction) such as a media stream or a communication connection, the device 502 may repeatedly ensure that any associated distance-based criterion is met for the duration of the event.

As represented by block 226, at some point the procedure of FIG. 2 may terminate or be disabled depending on the particular outcome of one or more of the operations discussed above.

It should be appreciated that the operations represented by the blocks in the example of FIG. 2 are not necessarily performed in the illustrated order. For example, in some implementations the device 502 may determine the distance between the devices 402 and 502 before it receives a request from the device 402. Here, the device 502 may perform distance determination operations on a regular basis. Consequently, the device 502 may already have an accurate indication relating to the distance(s) between the devices 402 and 502 when the device 502 receives the request.

In addition, in some aspects the distance-related operations may be performed as a prerequisite to an authentication procedure, as part of an authentication procedure, after an authentication procedure, or some combination thereof In some aspects authentication may be automatically invoked if the devices are within a given distance of one another and/or are moved in a certain manner with respect to one another. Similarly, the synchronization test may be performed as a prerequisite to an authentication procedure, as part of an authentication procedure, after an authentication procedure, or some combination thereof. Also, the synchronization test may be performed as a prerequisite to a distance-based procedure, as part of a distance-based procedure, after a distance-based procedure, or some combination thereof.

Accordingly, the operations of block 222 may relate to the performance of authentication related operations when distance-based criteria are used as a prerequisite for commencing or completing authentication-related operations. Thus, performance of these functions may be based on whether the distance between the devices 402 and 502 is less than a threshold value and/or if the devices 402 and 502 are moved in a proper manner with respect to one another.

The device 402 may perform operations that are similar and/or complementary to these operations. Thus, if an authentication procedure is allowed (e.g., as indicated by receipt of a message from the device 502 indicating a successful comparison at block 220), the device 402 may perform authentication operations in cooperation with the device 502.

In view of the above, it should be appreciated that one or more functions and authentication-related operations may be invoked, terminated, or affected by any suitable distance-related characteristics of two or more devices. For example, operation of a function or authentication may depend on an absolute distance between devices, a defined sequence of distances between devices (where the defined sequence may be based on absolute distances or relative distances), a rate of change in relative distance between devices, a relative acceleration between devices, or some combination thereof. Thus, a function or authentication may be enabled or disabled depending on (e.g., is invoked, terminated, affected, etc., depending on) whether a measured parameter (e.g., distance, rate of change, or acceleration) between devices is less than, greater than, or substantially similar to (e.g., equal to) a defined threshold value (e.g., a corresponding defined parameter), or is below, above, or within a range of such threshold values.

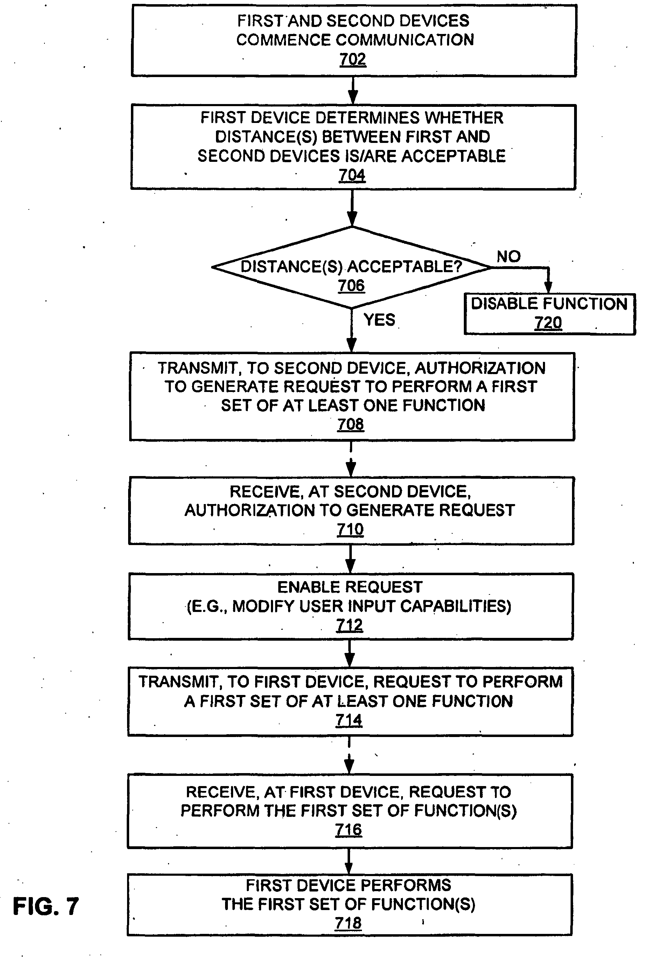

In some aspects a distance-based function may be used to control whether the device 402 is allowed to request the device 502 to perform one or more functions. FIG. 3A relates to an implementation where the device 402 performs distance-based operations to control whether the device 402 is allowed to send a request. FIG. 7 relates to an implementation where the device 502 performs distance-based operations to control whether the device 402 is allowed to send a request.

As represented by block 302 of FIG. 3A, the device 402 may commence communication with the device 502. The operations at block 302 may be similar to the operations described above in conjunction with block 202.

As represented by block 304, at some point the controller 418 may control whether the device 402 is allowed to request the device 502 perform one or more functions. In accordance with the teachings herein, this control may be based on an indication relating to at least one determined distance between the devices 402 and 502. Blocks 306 - 316 and 326 described several sample operations that may be performed in conjunction with controlling whether the device 402 is allowed to send a request to the device 502 based on such a distance-based test. These operations may be similar to the operations described above in conjunction with blocks 208 - 218 and 228.

As represented by block 318, once all of the criteria of the blocks 310 - 316 are met, the controller 418 (e.g., a request enabler 422) may enable the request, or perform some other similar procedure. As an example, the request enabler 422 may enable certain functionality of the device 402 relating to the generation and transmission of a request based on a distance-based criterion as discussed above. For example, in some implementations request-related indications may be displayed on a user display device of the device 402. When a request is not enabled, the request-related indications may be "grayed out" on the display device thereby indicating that the corresponding operations may not be invoked. In contrast, when a request is enabled, the request related indications may be displayed in a normal manner thereby indicating that corresponding operations may be invoked. It should be appreciated that other techniques may be employed by the device 402 to enable or disable a request.

In some implementations a request may be automatically allowed (e.g., when the devices commence communication). In this case, the device 402 may monitor the distance(s) between the devices 402 and 502 to determine when to disable the requests. For example, a distance-based criterion as discussed above may specify one or more distances or relative motions between the devices 402 and 502 that cause the request to be disabled. As a more specific example, the device 402 may monitor the distance between the devices 402 and 502 to determine whether the distance is equal to or exceeds a threshold parameter. In the event the determined distance is greater than or equal to this parameter, the request disabler 424 may disable the requests.

As represented by block 320, the device 402 (e.g., the request generator 428) may generate the request and cooperate with the transceiver 410 to transmit the request to the device 502. As represented by block 322, in some aspects the device 402 may repeatedly determine the distance between the devices 402 and 502 to determine whether the requests should be enabled or disabled for a given event (e.g., transaction, etc.). As represented by block 324, at some point the procedure of FIG. 3A may terminate or be disabled depending on the particular outcome of one or more of the operations discussed above.

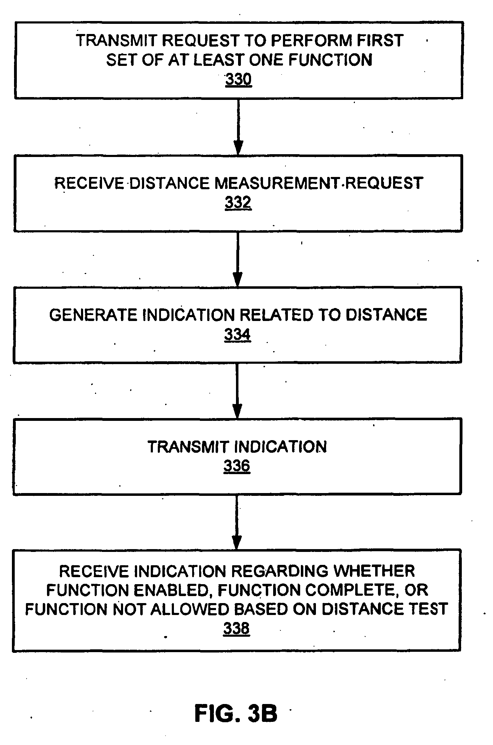

Referring now to FIG. 3B, sample aspects of other operations that may be performed in conjunction with a request to perform one or more functions will be treated. These operations may commence, for example, after the devices 402 and 502 commence communication with one another (e.g., as in blocks 202 and 302 above). As represented by block 330, the device 402 transmits a message to the device 502 requesting that the device 502 perform a first set of at least one function.

As represented by block 332, in response to the request, the device 402 may receive a message from the device 502 requesting that the device 402 perform some distance measurement-related operation. Here, the device 402 may generate a response signal for a round-trip time distance measurement operation or the device 402 may perform some other distance measurement operation as discussed herein. As represented by block 334, the device 403 may then generate a corresponding indication. Such an indication may relate to, for example, the timing associated with the round-trip time measurement operations performed by the device 402 or a distance-related parameter generated by some other distance measurement operation. The device 402 may then transmit the indication to the device 502 (block 336).

As represented by block 338, in response to the transmitted indication, the device 402 may receive a message from the device 502 that indicates whether the request has been accepted. For example, the device 402 may receive an indication that the function is enabled and/or that the function has completed. Alternatively, the device 402 may receive an indication that the function was not allowed based on the results of the distance measurement-related operations.

Referring now to FIG. 7, in some applications a first device (e.g., device 502) may control whether a second device (e.g., device 402) may request the first device to perform one or more functions. As represented by block 702, the devices 402 and 502 commence communication using authentication or some other similar procedure (e.g., as discussed above) that may precede, follow, or incorporate distance-based functionality as taught herein.

Blocks 704 - 708 relate to operations that may be performed by the device 502 to transmit a message to the device 402, authorizing the device 402 to send a request to the device 502. At block 704 the device 502 determines whether the distance(s) between the devices is (or are) acceptable using one or more of the procedures taught herein. If the distance is or the distances are acceptable at block 706, the device 502 transmits a message to the second device indicating that the second device is authorized to generate a request (block 708). If not, the device 502 may send a message to the device 402 indicating that the function is disabled or is not allowed based on the results of the distance measurement-related operations (block 720).

Blocks 710 - 714 relate to operations that may be performed by the device 402 to transmit the request to the device 502. After receiving the authorization to generate a request at block 710, the device 402 enables a request a block 712. This may involve, for example, enabling certain functionality of a user input device as discussed above. At block 714, the device 402 then transmits the request to the device 502.

Block 716 and 718 relate to operations that may be performed by the device 502 to perform the requested function or functions. Thus, as discussed above, after receiving the request at block 716, the device 502 performs the requested function or functions.

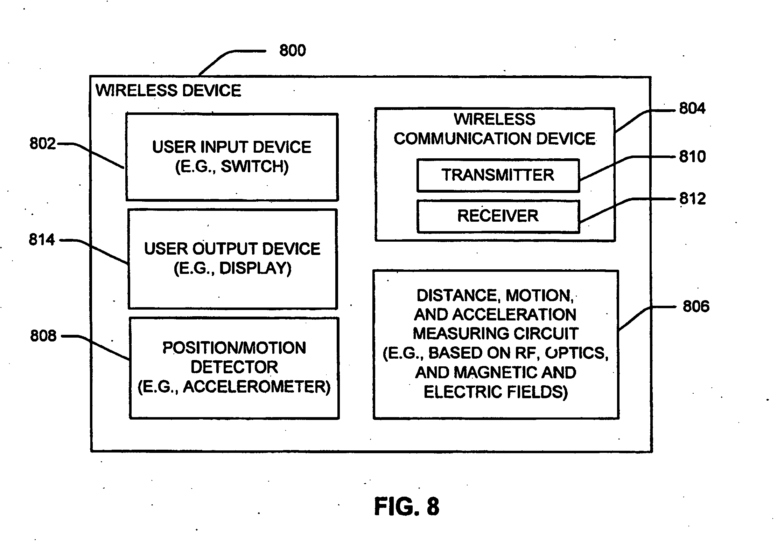

It should be appreciated that the components described herein may take a variety of forms. For example, FIG. 8 illustrates that a wireless device 800 (e.g., similar to the device 402 and/or the device 502) may include in broad terms functionality relating to a user input device 802, a communication device 804, a distance, motion, and acceleration measuring circuit 806, a position/motion detector 808, and a user output device 814.

The user input device 802 may comprise one or more of a variety of components that enable a user to provide some form of input to the wireless device 800. For example, the user input device 802 may comprise one or more switches such as a pushbutton or a keypad. The user input device 802 also may comprise a touch-screen, a touchpad, or other similar input mechanism. The user input device 802 may comprise a pointing device such as a mouse, trackball, an electronic pen, a pointing stick, etc. The user input device 802 also may be adapted to receive non-mechanical forms of input such as an audio (e.g., voice) input, an optical-based input, an RF-based input, or some other suitable form of input. As discussed above, the user input device 802 may be utilized by the user to initiate some function in the wireless device such as facilitating authentication or presence management. As an example of the latter case, the user input device 802 may comprise the input device discussed above that is activated at substantially the same time on both of the devices 402 and 502.

The communication device 804 may comprise a transceiver (e.g., a radio) with associated transmitter and receiver components 810 and 812, respectively, that include various components (e.g., signal generators and signal processors) that facilitate communication over a wireless medium. To this end, the communication device 804 may employ one or more of various wireless physical layer schemes. For example, the physical layer may utilize some form of CDMA, TDMA, OFDM, OFDMA, or other modulation and multiplexing schemes.

In some aspects the communication device 804 may communicate via a pulsed-based physical layer. Here, the physical layer may utilize ultra-wideband pulses that have a relatively short length (e.g., on the order of a few nanoseconds) and a relatively wide bandwidth. In some aspects an ultra-wide band system may be defined as a system having a fractional bandwidth on the order of approximately 20% or more and/or having a bandwidth on the order of approximately 500 MHz or more.

The circuit 806 also may comprise one or more of a variety of components adapted to measure one or more of distance, motion, and acceleration. As discussed above, various techniques may be employed to measure distance including, for example, two-way ranging, interrogations/response signals, received power measurements, acceleration readings, digital or analog imaging, detecting changes in electrical and magnetic fields, and detecting a Doppler shift in signals. Accordingly, the circuit 806 may employ corresponding circuitry (e.g., RF circuitry, optics, accelerometers, signal strength sensors, electrical and magnetic fields sensors, or Doppler shift sensors) to measure distance using one or more these techniques. In a specific example, an optical device such as a video device may employ video processing to compute the rate of change in relative distance based on frame differences and similarities. In another example, the rate of change in relative distance may be determined by identifying a rate of change in the relative orientation of electrical and magnetic fields. Also, in some applications an accelerometer may be used to obtain a measurement of distance, velocity, or acceleration.

In some implementations, one or more of the components of the circuit 806 may be implemented in the wireless communication device 804. For example, an implementation that determines distance by calculating the round-trip time of RF signals may utilize the transmitter and receiver components to transmit and receive ranging signals (e.g., ultra-wideband pulses) or other signals that are used to calculate a round-trip time.

In some implementations a position and/or motion detector 808 may be employed to determine one or more distance-related parameters associated with two or more devices. For example, through the use of an accelerometer in one or more of the devices, the rate of change in relative distance between two devices may be more easily obtained or determined with greater accuracy. In some implementations one or more of the components the position/motion detector 808 may be implemented in the circuit 806.

The user output device 814 may comprise one or more of a variety of components that present some form of output to a user of the device 800. For example, the user output device 814 may provide a visual output, an audible output, or some other suitable form of output. Consequently, the user output device 814 may comprise corresponding components including, for example, a display device such as display screen or one or more lighting elements such as LEDs; a sound transducer (e.g., a speaker); or some other suitable mechanism (e.g., transducer).

A device (e.g., device 402, 502, or 800) may include various components that perform functions associated with various sensed characteristics. For example, a headset may include a transducer adapted to provide an audible output based on a signal received by a receiver or based on whether the headset is allowed to request a device to perform one or more functions. A watch may include a display adapted to provide a visual output based on a signal received by a receiver or may include an input device adapted to provide signals to be transmitted via a transmitter. A medical device may include a sensor adapted to generate sensed signals to be transmitted to a device (e.g. via a transmitter).

The teachings herein may be incorporated into (e.g., implemented within or performed by) a variety of apparatuses (e.g., devices). For example, one or more aspects taught herein may be incorporated into a phone (e.g., a cellular phone), a personal data assistant ("PDA"), an entertainment device (e.g., a music or video device), a headset (e.g., headphones, an earpiece, etc.), a microphone, a medical device (e.g., a biometric sensor, a heart rate monitor, a pedometer, an EKG device, etc.), a user I/O device (e.g., a watch, a remote control, a light switch, a keyboard, a mouse, etc.), a tire pressure monitor, a computer, a point-of-sale device, an entertainment device, a hearing aid, a set-top box, or any other suitable device.

These devices may have different power and data requirements. In some aspects, the teachings herein may be adapted for use in low power applications (e.g., through the use of a pulse-based signaling scheme and low duty cycle modes) and may support a variety of data rates including relatively high data rates (e.g., through the use of high-bandwidth pulses).

A device (e.g., device 402, 502, or 800) may support or otherwise use various wireless communication links and wireless network topologies. For example, in some aspects the devices 402 and 502 may comprise or form part of a body area network or a personal area network (e.g., an ultra-wideband network). In addition, in some aspects the devices 402 and 502 may comprise or form part of a local area network or a wide area network. The devices 402 and 502 also may support or otherwise use one or more of a variety of wireless communication protocols or standards including, for example, CDMA, TDMA, OFDM, OFDMA, WiMAX, Wi-Fi, and other wireless technologies. Accordingly, the devices 402 and 502 may include appropriate components to establish one or more communication links using various wireless technologies.

In some aspects a device (e.g., device 502) may comprises an access device (e.g., a Wi-Fi access point) for a communication system. For example, the device 502 may provide connectivity to another network (e.g., a wide area network such as the Internet) via a wired or wireless communication link. Accordingly, the device 502 may enable the device 402 (e.g., a Wi-Fi station) to access the other network. In addition, it should be appreciated that one or both of the devices 402 and 502 may be portable or, in some cases, relatively non-portable.

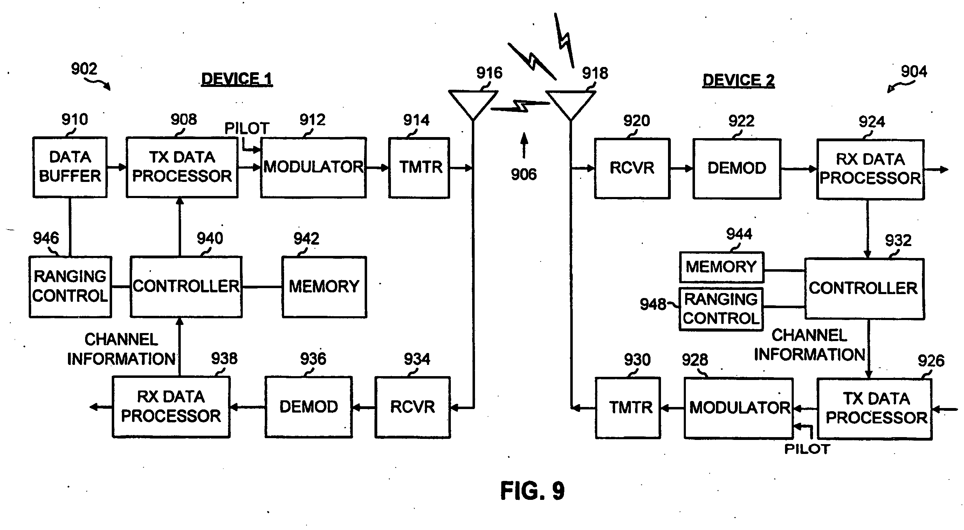

The teachings herein may be incorporated into a device employing various components for communicating with at least one other device. FIG. 9 depicts several sample components that may be employed to facilitate communication between devices. Here, a first device (e.g., an access terminal) 902 and a second device (e.g., an access point) 904 are adapted to communicate via a communication link 906 over a suitable medium.

Initially, components involved in sending information from the device 902 to the device 904 (e.g., a reverse link) will be treated. A transmit ("TX") data processor 908 receives traffic data (e.g., data packets) from a data buffer 910 or some other suitable component. The transmit data processor 908 processes (e.g., encodes, interleaves, and symbol maps) each data packet based on a selected coding and modulation scheme, and provides data symbols. In general, a data symbol is a modulation symbol for data, and a pilot symbol is a modulation symbol for a pilot (which is known a priori). A modulator 912 receives the data symbols, pilot symbols, and possibly signaling for the reverse link, and performs modulation (e.g., OFDM or some other suitable modulation) and/or other processing as specified by the system, and provides a stream of output chips. A transmitter ("TMTR") 914 processes (e.g., converts to analog, filters, amplifies, and frequency upconverts) the output chip stream and generates a modulated signal, which is then transmitted from an antenna 916.

The modulated signals transmitted by the device 902 (along with signals from other devices in communication with the device 904) are received by an antenna 918 of the device 904. A receiver ("RCVR") 920 processes (e.g., conditions and digitizes) the received signal from the antenna 918 and provides received samples. A demodulator ("DEMOD") 922 processes (e.g., demodulates and detects) the received samples and provides detected data symbols, which may be a noisy estimate of the data symbols transmitted to the device 904 by the other device(s). A receive ("RX") data processor 924 processes (e.g., symbol demaps, deinterleaves, and decodes) the detected data symbols and provides decoded data associated with each transmitting device (e.g., device 902).

Components involved in sending information from the device 904 to the device 902 (e.g., a forward link) will be now be treated. At the device 904, traffic data is processed by a transmit ("TX") data processor 926 to generate data symbols. A modulator 928 receives the data symbols, pilot symbols, and signaling for the forward link, performs modulation (e.g., OFDM or some other suitable modulation) and/or other pertinent processing, and provides an output chip stream, which is further conditioned by a transmitter ("TMTR") 930 and transmitted from the antenna 918. In some implementations signaling for the forward link may include power control commands and other information (e.g., relating to a communication channel) generated by a controller 932 for all devices (e.g. terminals) transmitting on the reverse link to the device 904.

At the device 902, the modulated signal transmitted by the device 904 is received by the antenna 916, conditioned and digitized by a receiver ("RCVR") 934, and processed by a demodulator ("DEMOD") 936 to obtain detected data symbols. A receive ("RX") data processor 938 processes the detected data symbols and provides decoded data for the device 902 and the forward link signaling. A controller 940 receives power control commands and other information to control data transmission and to control transmit power on the reverse link to the device 904.

The controllers 940 and 932 direct various operations of the device 902 and the device 904, respectively. For example, a controller may determine an appropriate filter, reporting information about the filter, and decode information using a filter. Data memories 942 and 944 may store program codes and data used by the controllers 940 and 932, respectively.

FIG. 9 also illustrates that the communication components may include one or more components that perform ranging-related operations as taught herein. For example, a ranging control component 946 may cooperate with the controller 940 and/or other components of the device 902 to send and receive ranging-related signals and information to another device (e.g., device 904). Similarly, a ranging control component 948 may cooperate with the controller 932 and/or other components of the device 904 to send and receive ranging-related signals and information to another device (e.g., device 902).

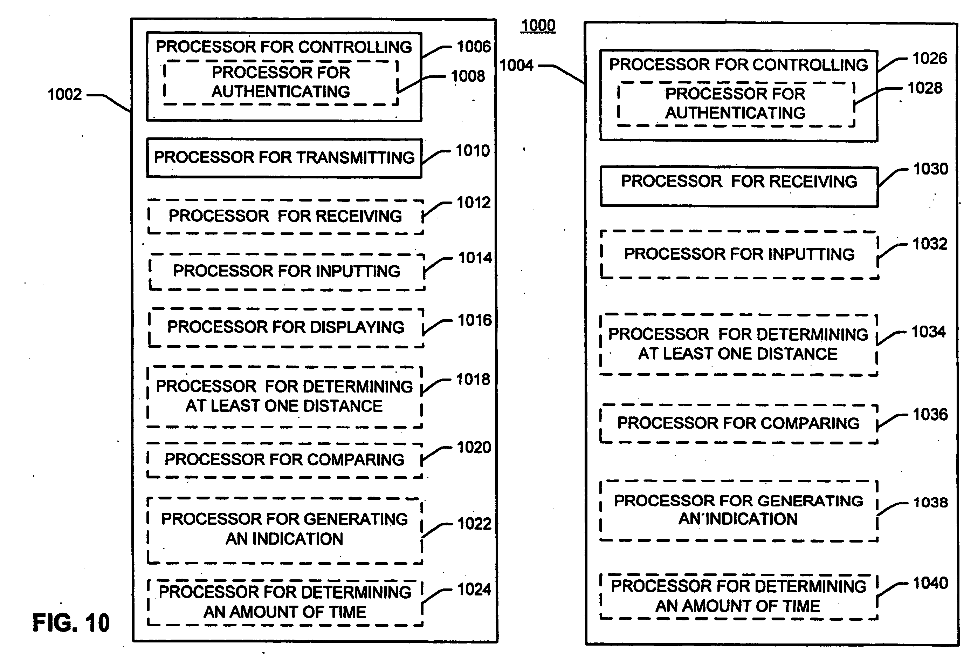

The components described herein may be implemented in a variety of ways. Referring to FIG. 10, a system 1000 is represented as a series of interrelated functional blocks that may represent functions implemented by, for example a processor, software, some combination thereof, or in some other manner as taught herein.

As shown in FIG. 10, the system 1000 may comprises an apparatus 1002 (e.g., a requesting device) and an apparatus 1004 (e.g., a function device). The apparatus 1002 include one or more modules 1006, 1008, 1010, 1012, 1014, 1016, 1018, 1020, 1022, and 1024 that may perform one or more of the functions described above with regard to various figures. For example, a processor for controlling 1006 may provide various functionality relating to controlling operations as taught herein and may correspond to, for example, component 418 discussed above. A processor for authenticating 1008 may provide various functionality relating to authentication as taught herein and may correspond to, for example, component 420 discussed above. A processor for transmitting 1010 may provide various functionality relating to transmitting information to another device as taught herein and may correspond to, for example, component 110 discussed above. A processor for receiving 1012 may provide various functionality relating to receiving information from another device as taught herein and may correspond to, for example, component 122 discussed above. A processor for inputting 1014 may facilitate user input and may correspond to, for example, component 802 discussed above. A processor for displaying 1016 may provide various functionality relating to displaying images as taught herein and may correspond to, for example, component 814 discussed above. A processor for determining at least one distance 1018 may provide various functionality relating to determining distance as taught herein and may correspond to, for example, component 408 discussed above. A processor for comparing 1020 may provide various functionality relating to comparing distance-based information and other information as taught herein and may correspond to, for example, component 414 discussed above. A processor for generating an indication 1022 may generate one or more indications as taught herein and may correspond to, for example, component 412 discussed above. A processor for determining an amount of time 1024 may provide various functionality relating to tracking time as taught herein and may correspond to, for example, component 426 discussed above.

The apparatus 1004 also includes one or more modules 1026, 1028, 1030, 1032, 1034, 1036, 1038, and 1040 that may perform one or more of the functions described above with regard to various figures. For example, a processor for controlling 1026 may provide various functionality relating to controlling operations as taught herein and may correspond to, for example, component 518 discussed above. A processor for authenticating 1028 may provide various functionality relating to authentication as taught herein and may correspond to, for example, component 520 discussed above. A processor for receiving 1030 may provide various functionality relating to receiving information from another device as taught herein and may correspond to, for example, component 114 discussed above. A processor for inputting 1032 may facilitate user input and may correspond to, for example, component 802 discussed above. A processor for determining at least one distance 1034 may provide various functionality relating to determining distance as taught herein and may correspond to, for example, component 508 discussed above. A processor for comparing 1036 may provide various functionality relating to comparing distance-based information and other information as taught herein and may correspond to, for example, component 514 discussed above. A processor for generating an indication 1038 may generate one or more indications as taught herein and may correspond to, for example, component 512 discussed above. A processor for determining an amount of time 1040 may provide various functionality relating to tracking time as taught herein and may correspond to, for example, component 532 discussed above.

As noted above, FIG. 10 illustrates that in some aspects these components may be implemented via appropriate processor components. These processor components may in some aspects be implemented, at least in part, using structure as taught herein. In some aspects a processor may be adapted to implement a portion or all of the functionality of one or more of these components. In some aspects one or more of the components represented by dashed boxes are optional.

In some aspects the apparatus 1000 may comprise an integrated circuit. Thus, the integrated circuit may comprise one or more processors that provide the functionality of the processor components illustrated in FIG. 10. For example, in some aspects a single processor may implement the functionality of the illustrated processor components, while in other aspects more than one processor may implement the functionality of the illustrated processor components. In addition, in some aspects the integrated circuit may comprise other types of components that implement some or all of the functionality of the illustrated processor components.

In addition, the components and functions represented by FIG. 10, as well as other components and functions described herein, may be implemented using any suitable means. Such means also may be implemented, at least in part, using corresponding structure as taught herein. For example, in some aspects means for controlling may comprise a controller, means for authenticating may comprise an authentication processor, means for transmitting may comprise a transmitter, means for receiving may comprise a receiver, means for inputting may comprise a user input device, means for displaying may comprise a user output device, means for determining at least one distance may comprise a distance determiner, means for comparing may comprise a comparator, means for generating an indication may comprise an indication generator, and means for determining an amount of time may comprise a timer. One or more of such means also may be implemented in accordance with one or more of the processor components of FIG. 10.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that any of the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

The steps of a method or algorithm described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such the processor can read information (e.g., code) from and write information to the storage medium. A sample storage medium may be integral to the processor. The processor and the storage medium may reside in an ASIC. The ASIC may reside in user equipment. In the alternative, the processor and the storage medium may reside as discrete components in user equipment. Moreover, in some aspects any suitable computer-program product may comprise a computer-readable medium comprising codes (e.g., executable by at least one computer) relating to one or more of the aspects of the disclosure. In some aspects a computer program product may comprise packaging materials.

The previous description of the disclosed aspects is provided to enable any person skilled in the art to make or use the present disclosure. Various modifications to these aspects will be readily apparent to those skilled in the art, and the generic principles defined herein may be applied to other aspects without departing from the scope of the disclosure. Thus, the present disclosure is not intended to be limited to the aspects shown herein but is to be accorded the widest scope consistent with the principles and novel features disclosed herein.

## Claims

1. A method of controlling functionality of a device, comprising:
receiving, by a first device, a request from a second device to perform a first set of at least one function; and
controlling, based on an indication relating to at least one determined distance between the first device and the second device, whether the first device is allowed to perform the first set of at least one function requested by the second device, wherein the controlling comprises enabling the first device to perform the first set of at least one function, and wherein the method further comprises:
repeatedly determining the at least one distance between the first device and the second device to repeatedly determine whether to continue enabling the first device to perform the first set of at least one function.

2. The method of claim 1, wherein the controlling further comprises disabling the first device from performing the first set of at least one function.

3. The method of claim 1, further comprising determining an amount of time the indication meets a defined criterion, wherein the controlling is further based on the determined amount of time.

4. The method of claim 1, wherein the controlling comprises enabling the first device to perform the first set of at least one function if the indication is less than a defined threshold or is equal to the defined threshold.

5. The method of claim 4, wherein the indication comprises:
a determined distance between the first device and the second device;
a determined rate of change in relative distance between the first device and the second device; or
a determined relative acceleration between the first device and the second device.

6. The method of claim 1, wherein the controlling comprises disabling the first device from performing the first set of at least one function if the indication is greater than a defined threshold or is equal to the defined threshold.

7. The method of claim 6, wherein the indication comprises:
a determined distance between the first device and the second device;
a determined rate of change in relative distance between the first device and the second device; or
a determined relative acceleration between the first device and the second device.

8. The method of claim 1, wherein the controlling is further based on whether the indication falls within a defined range of values.

9. The method of claim 8, wherein the indication comprises:
a determined distance between the first device and the second device;
a plurality of determined distances between the first device and the second device;
a determined rate of change in relative distance between the first device and the second device; or
a determined relative acceleration between the first device and the second device.

10. The method of claim 1, wherein:
the at least one determined distance comprises a plurality of determined distances between the first device and the second device;
the indication comprises a indication which relates to the plurality of determined distances; and
the controlling is further based on whether the indication is substantially similar to a defined sequence.

11. An apparatus for controlling functionality, comprising:
means for receiving a request from a device to perform a first set of at least one function; and
means for controlling, based on an indication relating to at least one determined distance between the apparatus and the device, whether the apparatus is allowed to perform the first set of at least one function requested by the device, wherein the means for controlling are configured to enable the apparatus to perform the first set of at least one function, and wherein the apparatus further comprises:
means for repeatedly determining the at least one distance between the apparatus and the device to repeatedly determine whether to continue enabling the apparatus to perform the first set of at least one function.

12. A computer-program product for controlling functionality, comprising:
computer-readable medium comprising codes executable by at least one computer to:
receive a request from a second device to perform a first set of at least one function;
control, based on an indication relating to at least one determined distance between a first device and the second device, whether the first device is allowed to perform the first set of at least one function requested by the second device wherein the controlling comprises enabling the first device to perform the first set of at least one function; and
repeatedly determine the at least one distance between the first device and the second device to repeatedly determine whether to continue enabling the first device to perform the first set of at least one function.

13. A headset for controlling functionality, comprising:
a receiver adapted to receive a request from a device to perform a first set of at least one function;
a controller adapted to control, based on an indication relating to at least one determined distance between the headset and the device, whether the headset is allowed to perform the first set of at least one function requested by the device, wherein the controller is configured to enable the headset to perform the first set of at least one function, and wherein the controller is further adapted to:
repeatedly determine the at least one distance between the headset and the device to repeatedly determine whether to continue enabling the headset to perform the first set of at least one function; and
a transducer adapted to provide an audible output based on a signal received by the receiver.

14. A watch for controlling functionality, comprising:
a receiver adapted to receive a request from a device to perform a first set of at least one function;
a controller adapted to control, based on an indication relating to at least one determined distance between the watch and the device, whether the watch is allowed to perform the first set of at least one function requested by the device, wherein the controller is further adapted to:
repeatedly determine the at least one distance between the watch and the device to repeatedly determine whether to continue enabling the watch to perform the first set of at least one function; and
a display adapted to provide a visual output based on a signal received by the receiver.

15. A medical device for controlling functionality, comprising:
a receiver adapted to receive a request from a device to perform a first set of at least one function;
a controller adapted to control, based on an indication relating to at least one determined distance between the medical device and the device, whether the medical device is allowed to perform the first set of at least one function requested by the device, wherein the controller is further adapted to:
repeatedly determine the at least one distance between the medical device and the device to repeatedly determine whether to continue enabling the medical device to perform the first set of at least one function; and
a sensor adapted to generate sensed signals to be transmitted to the device.

## Patentansprüche

1. Ein Verfahren zum Steuern der Funktionalität eines Geräts, wobei das Verfahren folgende Schritte aufweist:
Empfangen, durch ein erstes Gerät, einer Anfrage von einem zweiten Gerät für das Durchführen eines ersten Satzes mit wenigstens einer Funktion, und
Steuern, auf der Basis einer Angabe zu wenigstens einer bestimmten Distanz zwischen dem ersten Gerät und dem zweiten Gerät, ob dem ersten Gerät das durch das zweite Gerät angefragte Durchführen des ersten Satzes mit wenigstens einer Funktion gestattet ist, wobei das Steuern das Erlauben des ersten Geräts für das Durchführen des ersten Satzes mit wenigstens einer Funktion aufweist, und wobei das Verfahren weiterhin aufweist:
wiederholtes Bestimmen der wenigstens einen Distanz zwischen dem ersten Gerät und dem zweiten Gerät, um wiederholt zu bestimmen, ob das Erlauben des ersten Geräts für das Durchführen des ersten Satzes mit wenigstens einer Funktion fortgesetzt werden soll.

2. Verfahren nach Anspruch 1, wobei das Steuern weiterhin das Deaktivieren des ersten Geräts für das Durchführen des ersten Satzes mit wenigstens einer Funktion aufweist.

3. Verfahren nach Anspruch 1, das weiterhin das Bestimmen einer Zeitdauer, für welche die Angabe ein definiertes Kriterium erfüllt, aufweist, wobei das Steuern weiterhin auf der bestimmten Zeitdauer basiert.

4. Verfahren nach Anspruch 1, wobei das Steuern das Erlauben des ersten Geräts für das Durchführen des ersten Satzes mit wenigstens einer Funktion, wenn die Angabe kleiner als ein definierter Schwellwert oder gleich dem definierten Schwellwert ist, aufweist.

5. Verfahren nach Anspruch 4, wobei die Angabe aufweist:
eine bestimmte Distanz zwischen dem ersten Gerät und dem zweiten Gerät,
eine bestimmte Änderungsrate der relativen Distanz zwischen dem ersten Gerät und dem zweiten Gerät, oder
eine bestimmte relative Beschleunigung zwischen dem ersten Gerät und dem zweiten Gerät.

6. Verfahren nach Anspruch 1, wobei das Steuern das Deaktivieren des ersten Geräts für das Durchführen des ersten Satzes mit wenigstens einer Funktion, wenn die Angabe größer als ein definierter Schwellwert oder gleich dem definierten Schwellwert ist, aufweist.

7. Verfahren nach Anspruch 6, wobei die Angabe aufweist:
eine bestimmte Distanz zwischen dem ersten Gerät und dem zweiten Gerät,
eine bestimmte Änderungsrate der relativen Distanz zwischen dem ersten Gerät und dem zweiten Gerät, oder
eine bestimmte relative Beschleunigung zwischen dem ersten Gerät und dem zweiten Gerät.

8. Verfahren nach Anspruch 1, wobei das Steuern weiterhin darauf basiert, ob die Angabe in einen definierten Bereich von Werten fällt.

9. Verfahren nach Anspruch 8, wobei die Angabe aufweist:
eine bestimmte Distanz zwischen dem ersten Gerät und dem zweiten Gerät,
eine Vielzahl von bestimmten Distanzen zwischen dem ersten Gerät und dem zweiten Gerät,
eine bestimmte Änderungsrate der relativen Distanz zwischen dem ersten Gerät und dem zweiten Gerät, oder
eine bestimmte relative Beschleunigung zwischen dem ersten Gerät und dem zweiten Gerät.

10. Verfahren nach Anspruch 1, wobei:
die wenigstens eine bestimmte Distanz eine Vielzahl von bestimmten Distanzen zwischen dem ersten Gerät und dem zweiten Gerät aufweist,
die Angabe eine Angabe zu der Vielzahl von bestimmten Distanzen aufweist, und
das Steuern weiterhin darauf basiert, ob die Angabe einer definierten Sequenz im Wesentlichen ähnlich ist.

11. Vorrichtung zum Steuern einer Funktionalität, die umfasst:
Mittel zum Empfangen einer Anfrage von einem Gerät für das Durchführen eines ersten Satzes mit wenigstens einer Funktion, und
Mittel zum Steuern, auf der Basis einer Angabe zu wenigstens einer bestimmten Distanz zwischen der Vorrichtung und dem Gerät, ob der Vorrichtung das durch das Gerät angefragte Durchführen des ersten Satzes mit wenigstens einer Funktion gestattet ist, wobei die Mittel zum Steuern konfiguriert sind zum Erlauben der Vorrichtung für das Durchführen des ersten Satzes mit wenigstens einer Funktion, und wobei die Vorrichtung weiterhin aufweist:
Mittel zum wiederholten Bestimmen der wenigstens einen Distanz zwischen der Vorrichtung und dem Gerät, um wiederholt zu bestimmen, ob das Erlauben der Vorrichtung für das Durchführen des ersten Satzes mit wenigstens einer Funktion fortgesetzt werden soll.

12. Ein Computerprogrammprodukt zum Steuern einer Funktionalität, das aufweist:
ein computerlesbares Medium mit Codes, die durch wenigstens einen Computer ausgeführt werden können zum:
Empfangen einer Anfrage von einem zweiten Gerät für das Durchführen eines ersten Satzes mit wenigstens einer Funktion,
Steuern, auf der Basis einer Angabe zu wenigstens einer bestimmten Distanz zwischen einem ersten Gerät und dem zweiten Gerät, ob dem ersten Gerät das durch das zweite Gerät angefragte Durchführen des ersten Satzes mit wenigstens einer Funktion gestattet ist, wobei das Steuern das Erlauben des ersten Geräts für das Durchführen des ersten Satzes mit wenigstens einer Funktion aufweist, und
wiederholtes Bestimmen der wenigstens einen Distanz zwischen dem ersten Gerät und dem zweiten Gerät, um wiederholt zu bestimmen, ob das Erlauben des ersten Geräts für das Durchführen des ersten Satzes mit wenigstens einer Funktion fortgesetzt werden soll.

13. Ein Headset zum Steuern einer Funktionalität, das aufweist:
einen Empfänger, der ausgebildet ist zum Empfangen einer Anfrage von einem Gerät für das Durchführen eines ersten Satzes mit wenigstens einer Funktion,
eine Steuereinrichtung, die ausgebildet ist zum Steuern, auf der Basis einer Angabe zu wenigstens einer bestimmten Distanz zwischen dem Headset und dem Gerät, ob dem Headset das durch das Gerät angefragte Durchführen des ersten Satzes mit wenigstens einer Funktion gestattet ist, wobei die Steuereinrichtung konfiguriert ist zum Erlauben des Headsets für das Durchführen des ersten Satzes mit wenigstens einer Funktion, und wobei die Steuereinrichtung weiterhin ausgebildet ist zum:
wiederholten Bestimmen der wenigstens einen Distanz zwischen dem Headset und dem Gerät, um wiederholt zu bestimmen, ob das Erlauben des Headsets für das Durchführen des ersten Satzes mit wenigstens einer Funktion fortgesetzt werden soll, und
einen Transducer, der ausgebildet ist zum Vorsehen einer akustischen Ausgabe auf der Basis eines durch den Empfänger empfangenen Signals.

14. Eine Uhr zum Steuern einer Funktionalität, die aufweist:
einen Empfänger, der ausgebildet ist zum Empfangen einer Anfrage von einem Gerät für das Durchführen eines ersten Satzes mit wenigstens einer Funktion,
eine Steuereinrichtung, die ausgebildet ist zum Steuern, auf der Basis einer Angabe zu wenigstens einer bestimmten Distanz zwischen der Uhr und dem Gerät, ob der Uhr das durch das Gerät angefragte Durchführen des ersten Satzes mit wenigstens einer Funktion gestattet ist, wobei die Steuereinrichtung weiterhin ausgebildet ist zum:
wiederholten Bestimmen der wenigstens einen Distanz zwischen der Uhr und dem Gerät, um wiederholt zu bestimmen, ob das Erlauben der Uhr für das Durchführen des ersten Satzes mit wenigstens einer Funktion fortgesetzt werden soll, und
ein Display, das ausgebildet ist zum Vorsehen einer visuellen Ausgabe auf der Basis eines durch den Empfänger empfangenen Signals.

15. Ein medizinisches Gerät zum Steuern einer Funktionalität, das aufweist:
einen Empfänger, der ausgebildet ist zum Empfangen einer Anfrage von einem Gerät für das Durchführen eines ersten Satzes mit wenigstens einer Funktion,
eine Steuereinrichtung, die ausgebildet ist zum Steuern, auf der Basis einer Angabe zu wenigstens einer bestimmten Distanz zwischen dem medizinischen Gerät und dem Gerät, ob dem medizinischen Gerät das durch das Gerät angefragte Durchführen des ersten Satzes mit wenigstens einer Funktion gestattet ist, wobei die Steuereinrichtung weiterhin ausgebildet ist zum:
wiederholtes Bestimmen der wenigstens einen Distanz zwischen dem medizinischen Gerät und dem Gerät, um wiederholt zu bestimmen, ob das Erlauben des medizinischen Geräts für das Durchführen des ersten Satzes mit wenigstens einer Funktion fortgesetzt werden soll, und
einen Sensor, der ausgebildet ist zum Erzeugen von Erfassungssignalen für das Senden an das Gerät.

## Revendications

1. Procédé pour contrôler la fonctionnalité d'un dispositif, comprenant :
recevoir, par un premier dispositif, une requête provenant d'un deuxième dispositif pour réaliser un premier ensemble d'au moins une fonction ; et
contrôler, sur la base d'une indication concernant au moins une distance déterminée entre le premier dispositif et le deuxième dispositif, si le premier dispositif est autorisé à réaliser le premier ensemble d'au moins une fonction demandé par le deuxième dispositif, le contrôle comprenant le fait de permettre au premier dispositif de réaliser le premier ensemble d'au moins une fonction, et le procédé comprenant en outre :
déterminer de façon répétée ladite au moins une distance entre le premier dispositif et le deuxième dispositif pour déterminer de façon répétée s'il faut continuer à permettre au premier dispositif de réaliser le premier ensemble d'au moins une fonction.

2. Procédé selon la revendication 1, dans lequel le contrôle comprend en outre le fait de désactiver le premier dispositif de la réalisation du premier ensemble d'au moins une fonction.

3. Procédé selon la revendication 1, comprenant en outre la détermination d'une quantité de temps pendant laquelle l'indication satisfait un critère défini, le contrôle étant en outre basé sur la quantité de temps déterminée.

4. Procédé selon la revendication 1, dans lequel le contrôle comprend de permettre au premier dispositif de réaliser le premier ensemble d'au moins une fonction si l'indication est inférieure à un seuil défini ou est égale au seuil défini.

5. Procédé selon la revendication 4, dans lequel l'indication comprend :
une distance déterminée entre le premier dispositif et le deuxième dispositif ;
un taux déterminé de changement dans la distance relative entre le premier dispositif et le deuxième dispositif ; ou
une accélération relative déterminée entre le premier dispositif et le deuxième dispositif.

6. Procédé selon la revendication 1, dans lequel le contrôle comprend le fait de désactiver le premier dispositif de la réalisation du premier ensemble d'au moins une fonction si l'indication est supérieure à un seuil défini ou est égale au seuil défini.

7. Procédé selon la revendication 6, dans lequel l'indication comprend :
une distance déterminée entre le premier dispositif et le deuxième dispositif ;
un taux de changement déterminé dans la distance relative entre le premier dispositif et le deuxième dispositif ; ou
une accélération relative déterminée entre le premier dispositif et le deuxième dispositif.

8. Procédé selon la revendication 1, dans lequel le contrôle est en outre basé sur le fait que l'indication se trouve dans une plage de valeurs définie.

9. Procédé selon la revendication 8, dans lequel l'indication comprend :
une distance déterminée entre le premier dispositif et le deuxième dispositif ;
une pluralité de distances déterminées entre le premier dispositif et le deuxième dispositif ;
un taux de changement déterminé dans la distance relative entre le premier dispositif et le deuxième dispositif ; ou
une accélération relative déterminée entre le premier dispositif et le deuxième dispositif.

10. Procédé selon la revendication 1, dans lequel :
ladite au moins une distance déterminée comprend une pluralité de distances déterminées entre le premier dispositif et le deuxième dispositif ;
l'indication comprend une indication qui concerne la pluralité de distances déterminées ; et
le contrôle est en outre basé sur le fait que l'indication est sensiblement similaire à une séquence définie.

11. Appareil pour contrôler une fonctionnalité, comprenant :
des moyens pour recevoir une requête provenant d'un dispositif pour réaliser un premier ensemble d'au moins une fonction ; et
des moyens pour contrôler, sur la base d'une indication concernant au moins une distance déterminée entre l'appareil et le dispositif, si l'appareil est autorisé à réaliser le premier ensemble d'au moins une fonction demandé par le dispositif, dans lequel les moyens pour contrôler sont agencés pour permettre au appareil de réaliser le premier ensemble d'au moins une fonction, et l'appareil comprenant en outre :
des moyens pour déterminer de façon répétée ladite au moins une distance entre l'appareil et le dispositif pour déterminer de façon répétée s'il faut continuer à permettre au premier dispositif de réaliser le premier ensemble d'au moins une fonction.

12. Produit programme d'ordinateur pour contrôler une fonctionnalité, comprenant :
un support lisible par un ordinateur comprenant des codes exécutables par au moins un ordinateur pour :
recevoir une requête provenant d'un deuxième dispositif pour réaliser un premier ensemble d'au moins une fonction ; et
contrôler, sur la base d'une indication concernant au moins une distance déterminée entre un premier dispositif et le deuxième dispositif, si le premier dispositif est autorisé à réaliser le premier ensemble d'au moins une fonction demandé par le deuxième dispositif, le contrôle comprenant le fait de permettre au premier dispositif de réaliser le premier ensemble d'au moins une fonction ; et
déterminer de façon répétée ladite au moins une distance entre le premier dispositif et le deuxième dispositif pour déterminer de façon répétée s'il faut continuer à permettre au premier dispositif de réaliser le premier ensemble d'au moins une fonction.

13. Écouteur pour contrôler une fonctionnalité, comprenant :
un récepteur adapté pour recevoir une requête provenant d'un dispositif pour réaliser un premier ensemble d'au moins une fonction ;
un contrôleur adapté à contrôler, sur la base d'une indication concernant au moins une distance déterminée entre l'écouteur et le dispositif, si l'écouteur est autorisé à réaliser l'écouteur d'au moins une fonction demandé par le dispositif, le contrôleur étant agencé pour permettre au premier dispositif de réaliser le premier ensemble d'au moins une fonction, et le contrôleur étant en outre adapté à :
déterminer de façon répétée ladite au moins une distance entre l'écouteur et le dispositif pour déterminer de façon répétée s'il faut continuer de permettre au premier dispositif de réaliser le premier ensemble d'au moins une fonction ; et
un transducteur adapté à fournir une sortie audible sur la base d'un signal reçu par le récepteur.

14. Montre pour contrôler une fonctionnalité, comprenant :
un récepteur adapté pour recevoir une requête provenant d'un dispositif pour réaliser un premier ensemble d'au moins une fonction ;
un contrôleur adapté à contrôler, sur la base d'une indication concernant au moins une distance déterminée entre la montre et le dispositif, si la montre est autorisée à réaliser la montre d'au moins une fonction demandé par le dispositif, le contrôleur étant en outre adapté à :
déterminer de façon répétée ladite au moins une distance entre la montre et le dispositif pour déterminer de façon répétée s'il faut continuer de permettre au premier dispositif de réaliser le premier ensemble d'au moins une fonction ; et
un afficheur adapté à fournir une sortie visuelle sur la base d'un signal reçu par le récepteur.

15. Dispositif médical pour contrôler une fonctionnalité, comprenant :
un récepteur adapté pour recevoir une requête provenant d'un dispositif pour réaliser un premier ensemble d'au moins une fonction ;
un contrôleur adapté à contrôler, sur la base d'une indication concernant au moins une distance déterminée entre le dispositif médical et le dispositif, si le dispositif médical est autorisé à réaliser le premier ensemble d'au moins une fonction demandé par le dispositif, le contrôleur étant en outre adapté à :
déterminer de façon répétée ladite au moins une distance entre le dispositif médical et le dispositif pour déterminer de façon répétée s'il faut continuer de permettre au dispositif médical de réaliser le premier ensemble d'au moins une fonction ; et
un capteur adapté à générer des signaux détectés à transmettre au dispositif.
